(19) Europäisches Patentamt
European Patent Office
Office européen des brevets

(11) Veröffentlichungsnummer: **0 381 030 B1**

(12) **EUROPÄISCHE PATENTSCHRIFT**

(45) Veröffentlichungstag der Patentschrift: **18.05.94**

(21) Anmeldenummer: **90101378.9**

(22) Anmeldetag: **24.01.90**

(51) Int. Cl.5: **C08F 220/12**, C08F 220/18, C08F 220/30, C08J 7/04, C08F 265/06, //(C08F220/12, 220:18,220:30),(C08F220/18, 220:12),(C08F220/30,220:12)

# (54) Wässriges Polyacrylat-System für die Schlusslackierung von Polyvinylchlorid-Oberflächen.

(30) Priorität: **28.01.89 DE 3902557**

(43) Veröffentlichungstag der Anmeldung: **08.08.90 Patentblatt 90/32**

(45) Bekanntmachung des Hinweises auf die Patenterteilung: **18.05.94 Patentblatt 94/20**

(84) Benannte Vertragsstaaten: **AT BE CH DE DK ES FR GB IT LI NL SE**

(56) Entgegenhaltungen:
**EP-A- 0 018 847**
**EP-A- 0 020 125**
**EP-A- 0 115 066**

(73) Patentinhaber: **RÖHM GMBH**
**Kirschenallee**
**D-64293 Darmstadt(DE)**

(72) Erfinder: **Langerbeins, Klaus, Dr.**
**Uhlandstrasse 56**
**D-6070 Langen(DE)**
Erfinder: **Fink, Herbert, Dr.**
**Bahnhofstrasse 39**
**D-6101 Bickenbach(DE)**
Erfinder: **Fölsch, Karl-Josef, Dr.**
**Backhaushohl 19**
**D-6500 Mainz(DE)**
Erfinder: **Dinklage, Horst**
**Am Schlangensee 53**
**D-6110 Dieburg(DE)**

EP 0 381 030 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft die Verwendung einer wäßrigen Polyacrylat-Dispersion für die Herstellung eines Überzugs als Schlußlack auf einer Polyvinylchlorid-Oberfläche.

Stand der Technik

Nach der Verarbeitung von Polyvinylchlorid (PVC) zu Halbzeugen und Fertigteilen werden diese Gegenstände meist noch einer Oberflächenbehandlung unterzogen. Für diese Oberflächenbehandlung, die am einfachsten aus einer nachträglichen Beschichtung mit einem Lack besteht, können sowohl dekorative als auch funktionelle Gründe maßgebend sein. So kann beispielsweise als dekorativer Effekt der Glanzgrad der PVC-Gegenstandsoberfläche geändert werden, wobei zusätzlich eine Verbesserung der Stabilität des PVC gegenüber chemischem und physikalischem Abbau erreicht wird.

Auch bei Kunstledern, die wesentlich aus Fasermaterialien und Polymeren als Beschichtungsrohstoffen aufgebaut sind, haben solche, die mit weichgemachtem PVC beschichtet sind, mengenmäßig eine hohe Bedeutung. Die Oberflächen der Kunstlederbeschichtungen werden mit einem dünnen Lack, dem sogenannten Schlußlack versehen.

Neben dem dadurch auch möglichen Aufbringen eines dekorativen Design mit lederähnlichem Aussehen und mit Verleihung eines lederähnlichen Griffs, hat die Schlußlackschicht eine Sperrschichtfunktion, die das Ausschwitzen von Weichmachern verhindert, wodurch eine Versprödung und ein Klebrigwerden der PVC-Oberfläche, und damit die Schmutzhaftung darauf, verhindert werden.

Für Schlußlackierungen verwendet man verschiedene Polymere, welche die gewünschten Eigenschaften mehr oder weniger gut erbringen. Die Lacke werden aus Lösungen der Polymeren auf den PVC-Oberflächen erzeugt. Neben Polyurethanen und Polyamiden werden vorwiegend harte Polyacrylate, d.h. Polymere mit relativ hohem Polymethylmethacrylatanteil, die als witterungsstabile und ethanolfeste Lacke bekannt sind, als Schlußlacke aufgezogen. Als Haftvermittler für den Polyacrylatüberzug an der PVC-Oberfläche werden den Lacken noch haftvermittelnde Substanzen, wie z.B. Vinylchlorid-Vinylacetat-Copolymere, zugesetzt.

Unter den Gesichtspunkten des Umweltschutzes und der Arbeitssicherheit wurde versucht, die lösemittelhaltigen Lacke durch wäßrige Systeme zu ersetzen. Dazu wurden wäßrige Dispersionen von Polyacrylaten vorgeschlagen, die gegebenenfalls noch weitere, ungesättigte Zusätze enthalten können, und die dann nach dem Auftragen, gegebenenfalls durch Vernetzung, bei höherer Temperatur zum Überzug ausgehärtet werden. (Ullmann, Encyklopädie der technischen Chemie, 4. Auflage, Band 15, Seiten 163 bis 170).

So wird in der DE-C 25 59 790 ein Drucklack auf wäßriger Basis zur Herstellung von Tiefdruckfarben für Kunststoffbahnen, insbesondere für PVC-Folien, unter Verwendung von Bindemitteln auf Basis einer Mischung einer Polyacrylsäureesterdispersion und einer Polymethacrylsäureesterdispersion im Gewichtsverhältnis zwischen 100 : 4 und 100 : 8 beansprucht. Die Ester der Polyacrylsäure und der Polymethacrylsäure sind solche deren Estergruppen vorzugsweise aus geradkettigen, verzweigten oder cyclischen Alkylgruppen von 1 bis 8, vorzugsweise mit 1 bis 4 Kohlenstoffatomen bestehen. Ganz besonders gute Ergebnisse werden danach mit den Methyl- und Ethylestern erzielt.

Diese für Tiefdruckfarben für PVC-Folien gegebenenfalls ausreichenden Eigenschaften der Bindemittel auf Polyacrylsäureester- und Polymethacrylsäureesterdispersionsbasis, und die nach den in der DE-C 25 59 790 gemachten Angaben im Handel erhältliche Dispersionen sind, erweisen sich zwar für die Herstellung von haftfesten und relativ harten PVC-Schlußlackiervngen mit gegebenenfalls ausreichender Weichmachersperrwirkung brauchbar, sie sind jedoch nicht ethanol- und/oder wasserbeständig.

Aus der DE-A 31 12 704 ist eine wäßrige Dispersion oder Emulsion zum Herstellen eines ha ft festen Überzuges auf PVC-Oberflächen bekannt, die mindestens ein Acrylatpolymerisat mit einer Filmbildungstemperatur von über 60 Grad C, mindestens ein ungesättigtes Polyesterharz, 5 bis 20 Gew.-%, bezogen auf diese Polymere, Methylpyrrolidon und gegebenenfalls noch Melamin- und/oder Harnstoff-Formaldehyd-Harz enthält. Dieses wäßrige System muß nach Aufbringen auf die PVC-Oberfläche durch Zusatz eines Kobalt-Beschleunigers und eines wasserlöslichen Peroxids bei einer Temperatur von über 80 Grad C, vorzugsweise über 100 Grad C gehärtet werden. Als Acrylatpolymerisate sind solche bevorzugt geeignet, die mit Methacrylsäureestern niederer aliphatischer Alkohole mit 1 bis 3 C-Atomen hergestellt, und die bekannt und handelsüblich sind. Für die Haftung der so hergestellten Überzüge auf PVC-Oberflächen ist der Gehalt an Methylpyrrolidon erfindungswesentlich.

Durch die notwendige Härtung des ungesättigten Polyesterharzes, das als solches dem Überzug mangelnde Lichtechtheitseigenschaften bringt, ist der Lackierungsvorgang nicht vereinfacht. Probleme entstehen dadurch sowohl bei der Lagerbeständigkeit solcher Dispersionen als auch bei den Überzügen durch deren Vernetzung, die eine Überlackierung erschwert und eine Prägung des Schlußlackes infolge mangelnder Thermoplastizität verhindert.

In der DE-A 34 40 537 wird ein Verfahren zum Beschichten von Kunststoffteilen, insbesondere von solchen aus Hart-PVC, beschrieben, zu dem eine wäßrige Dispersion aus einem aliphatischen, reaktionsfähige Carboxylgruppen aufweisenden Polyurethan und aus einem Polyacrylat verwendet wird. Solche Polyurethan-haltigen Systeme geben Überzüge von mangelnder Lichtechtheit und mangelnder Wärmestandfestigkeit.

Aufgabe und Lösung

Im Hinblick auf die Verminderung von Umweltbelastungen durch Lösemittel, Erhöhung der Sicherheit und Verbesserungen der Bedingungen am Arbeitsplatz, stellte sich die Aufgabe, auf dem für Lösemittelhaltige (Meth)acrylatsysteme wichtigen Anwendungsgebiet zur PVC-Lackierung, wäßrige (Meth)-acrylatsysteme zu finden, die Schlußlacke mit dem vorgegebenen Eigenschaftsprofil ergeben. Solche Schlußlackeigenschaften betreffen u.a. Haftung, Weichmachersperrwirkung, Knickbeständigkeit, Wasser- und Ethanolbeständigkeit, sowie Lichtechtheit und Wärmefestigkeit.

Dispersionen von (Meth)acrylatpolymeren, die im wesentlichen durch Emulsionspolymerisation von solchen Methacrylsäureestern und Acrylsäureestern erhalten werden, in denen die Estergruppe geradkettige bzw. verzweigte Alkylgruppen von 1 bis 8, vorzugsweise solche von 1 bis 4 C-Atomen enthält, und welche besonders die Methyl- und Ethylester sind, stellen die gängigen, handelsüblichen Poly-(Meth)-acrylatdispersionen dar. Versuche mit Dispersionen dieser Art PVC-Schlußlacke mit vorgegebenen Eigenschaften herzustellen zeigten erstaunlicherweise, daß daraus resultierende Überzüge im Vergleich zu den aus Lösungen hergestellten, trotz gleichem oder ähnlichem Aufbau mit entsprechenden Monomeren, dem geforderten Eigenschaftsprofil nicht genügten. Dispersionspolymere mit relativ hoher Mindestfilmbildungstemperatur (MFT) führten praktisch nicht zu Filmen. Weicher eingestellte Polymerisate, d.h. Polymerisate, hergestellt mit einem größeren Anteil an (Meth)acrylat-Monomeren mit Estergruppen aus längeren Alkylresten, z.B. $C_4$- bis $C_8$-Alkylresten, gaben Filme, welche hafteten, aber klebrig und nicht alkoholfest waren.

Überraschenderweise wurde jetzt gefunden, daß mit Dispersionspolymeren auf (Meth)acrylat-Basis, die mit höheren Anteilen von (Meth)acrylestern, in denen die Esterreste aromatische Gruppen sind bzw. solche enthalten, aufgebaut sind, das Problem der PVC-Schlußlackierung mit wäßrigen Systemen gelöst ist.

Die Erfindung betrifft danach die:

Verwendung einer wäßrigen Dispersion von (Meth)acrylatpolymeren zum Herstellen eines Überzuges auf Polyvinylchlorid-Oberflächen durch Lackieren,

dadurch gekennzeichnet,

daß die (Meth)acrylatpolymeren Copolymerisate aus 10 bis 90 Gew.-% von Acryl- und/oder Methacrylsäurealkyl- bzw. cycloalkylestern mit 1 bis 10 C-Atomen im Esterrest, 90 bis 10 Gew.-% Acryl und/oder Methacrylsäureestern mit aromatischen Gruppen als Esterrest, bzw. aromatische Gruppen im Esterrest enthaltend, und 0 bis 5 Gew.-% polymerisierbarer Carbonsäuren sind, und die in Mengen von 0 bis 20 Gew.-% aus weiteren Monomeren aufgebaut sein können.

Die Copolymerisate sind vorzugsweise Emulsionspolymerisate und insbesondere mehrphasig, beispielsweise nach dem Kern-Schalen-Modell aufgebaut.

Vorteile der Erfindung

Die erfindungsgemäßen Dispersionen enthalten kein organisches Lösemittel, sind praktisch geruchsfrei und sind mit Wasser verdünnbar. Die aus diesen Dispersionen auf PVC-Oberflächen gebildeten Überzüge haften gut, sind damit auch knickbeständig, sind beständig gegen Wasser und Ethanol und haben eine gute Weichmachersperrwirkung, wodurch sie z.B. für die Schlußlackierung von Weich-PVC-Kunstledern hervorragend geeignet sind. Die Applizierung der Dispersion auf die zu veredelnden Oberflächen ist mit den gängigen Techniken einfach durchführbar und es bedarf keiner besonderen Härtungsreaktion auf der PVC-Oberfläche, um einen Lack, sowohl als Klarlack oder als pigmentierten Überzug, mit dem bekannten Eigenschaftprofil zu erzeugen.

Durchführung der Erfindung

Die erfindungsgemäß zu verwendenden (Meth)acrylatpolymeren werden in wäßriger Dispersion auf den zu behandelnden PVC-Oberflächen von Gegenständen aufgebracht und werden dazu bevorzugt durch Emulsionspolymerisation in wäßrigem Medium hergestellt. In der erfindungsgemäßen Dispersion kommen (Meth)acrylatpolymerisate zur Verwendung, deren Filmbildungstemperatur über 0 Grad C, vorzugsweise im Bereich von 0 bis 80 Grad C liegt. Die Filmbildung muß bei einer Temperatur innerhalb von 0 bis 100 Grad C mit oder ohne filmbildenden Hilfsmitteln stattfinden.

Das wesentlich aus aliphatischen und aromatischen Estern der Acryl- und/oder Methacrylsäure bestehende und damit hydrophob eingestellte Polymerisat kann aber auch geringe Mengen weniger hydrophobe, ja sogar ausgesprochen hydrophile Monomere als Bausteine enthalten. Solche hydrophilen Monomere sind beispielsweise polymerisierbare Carbonsäuren, Acrylsäure, Methacrylsäure, Maleinsäure oder deren Anhydrid. Sie sind in Mengen von 0 bis 5, vor allem 0,1 bis 3 Gew.-% in das Dispersionspolymere eingebaut. Monomere mit basischen Gruppen, wie N-Dimethylaminoethylmethacrylat, oder Acryl- und Methacrylamide, die im Amidrest auch Alkyl-, Cycloalkyl- oder Arylgruppen enthalten können, oder Monomere mit hydrophilen Alkoholen im Esterrest, wie beispielsweise 2-[2-(2-Ethoxiethoxi)ethoxi]ethylmethacrylat können in Mengen unter 10 Gew.-%, bevorzugt unter 5 Gew.-%, bis 0 Gew.-%, im Polymerisat eingebaut sein. Der Einbau solch polarer Monomerer in geringen Mengen wirkt sich auf die Stabilität der polymerhaltigen Dispersion positiv aus, in dem dadurch einer Verklumpung entgegengewirkt wird. Die so erreichten Langzeitstabilitäten sind für den Transport und die Lagerung der erfindungsgemäß zu verwendenden (Meth)-acrylatpolymerdispersionen wesentlich.

Bei dem zwingenden hydrophoben Charakter des (Meth)acrylat-Polymerisats handelt es sich daher um ein überwiegend bis ausschließlich aus Estern der Acryl- bzw. Methacrylsäure hergestelltes Polymerisat. Zur Herstellung des Polymerisats können aber auch noch andere, sowohl praktisch wasserunlösliche Comonomere, wie z.B. Styrol, α-Methylstyrol, Vinylacetat, als auch hydrophile polymerisierbare Verbindungen, wie N-Vinylimidazol, in solchen Anteilen mitverwendet werden, daß die gewünschten Eigenschaften der PVC-Oberflächenlacke eingehalten werden. Im allgemeinen liegt ihr Anteil dann bei 0 bis 20 Gew.-%, vorzugsweise bei 0 bis 10 Gew.-%.

Das (Meth)acrylatpolymerisat ist wesentlich, d.h. aus 80 bis 100 Gew.-%, vor allem aus 85 bis 99 Gew.-% und besonders aus 90 bis 98 Gew.-% aus Estern der Acryl- und/oder Methacrylsäure aufgebaut, wobei dies Copolymerisate aus 10 bis 90 Gew.-%, vor allem aus 20 bis 80 Gew.-%, insbesondere aus 40 bis 60 Gew.-% von Acrylsäure- und/oder Methacrylsäurealkyl- bzw. cycloalkylestern mit 1 bis 10 C-Atomen, vor allem mit 1 bis 6 C-Atomen, insbesondere Alkylestern mit 1 bis 4 C-Atomen im Esterrest, und aus 90 bis 10 Gew.-%, vor allem 30 bis 70 Gew.-%, insbesondere 40 bis 60 Gew.-% von Acrylsäure- und/oder Methacrylsäureestern mit aromatischen Gruppen als Esterrest, bzw. aromatische Gruppen im Esterrest enthaltend, sind.

Als aliphatische bzw. cycloaliphatische Acryl- und Methacrylester werden beispielsweise eingesetzt: Methylacrylat, Ethylacrylat, Isopropylacrylat, n-Butylacrylat, Methylmethacrylat, Ethylmethacrylat, n-Butylmethacrylat, n-Hexylmethacrylat, 2-Ethylhexylmethacrylat, Cyclohexylmethacrylat, 3,3,5-Trimethylcyclohexylmethacrylat.

Als Acryl- und Methacrylester mit aromatischen Gruppen als Esterrest, bzw. solche im Esterrest enthaltend, werden bevorzugt erfindungsgemäß eingesetzt:
Verbindungen der allgemeinen Formel

$$H_2C = \overset{R}{\overset{|}{C}} - \overset{O}{\overset{\|}{C}} - O - (X)_a - (Y)_b - A \qquad I,$$

in der

- R = H oder $CH_3$
- X = $CH_2$ mit
- a = 0, 1, 2, 3 oder 4 ist, oder für a = 3 oder 4, X auch eine verzweigte $C_3H_6$- oder $C_4H_8$-Gruppierung sein kann,
- Y = O oder NH mit
- b = O oder 1 und
- A = ein $C_6$- bis $C_{10}$-Arylrest, wie Phenyl oder $C_1$- bis $C_4$-Alkyl-Phenyl oder Naphthyl, bedeuten.

Beispiele für Verbindungen, die der allgemeinen Formel I entsprechen sind:
Phenylacrylat, p-Methylphenylacrylat, Phenylmethacrylat, p-Methylphenylmethacrylat, 1-Naphthylmethacrylat, Benzylmethacrylat, 2-Phenylethylmethacrylat, 3-Phenyl-n-propylacrylat, 2-Phenoxiethylmethacrylat, 2-Phenylaminoethylmethacrylat.

In den erfindungsgemäßen wäßrigen Dispersionen sind die (Meth)acrylatpolymeren beispielsweise nach dem Kern-Schalen-Modell mehrphasig aufgebaut. Im einfachsten Fall ist hierbei ein Polymerpartikel als Kern von weiterem Polymermaterial, das gegenüber dem Kernmaterial vorteilhafterweise eine andere Zusammensetzung hat, umhüllt. Solche Polymerstrukturen lassen sich wie bekannt besonders einfach durch Emulsionspolymerisation herstellen (Journal of Polymer Science, Vol. 22, 1365-1372 (1984)). Daher stellt man die erfindungsgemäßen wäßrigen Polymerdispersionen am vorteilhaftesten durch Polymerisation der dafür geeigneten Monomeren in wäßriger Emulsion, teilweise auch in Suspension, nach einschlägig bekannten Verfahren her (s. dazu H. Rauch-Puntigam, Th.Völker, "Acryl- und Methacrylverbindungen", Seiten 217 bis 228, Springer-Verlag, Heidelberg 1967; Ullmann's Encyclopädie der technischen Chemie, 4. Auflage, Band 19, Seiten 11 bis 14 und 125 bis 141, Verlag Chemie 1980).

Zum Erreichen eines mehrphasigen Aufbaus der dispergierten Polymerteilchen werden bei der Emulsionspolymerisation bekanntermaßen nacheinander verschiedene Monomerzusammensetzungen in denselben Polymerisationsansatz eingegeben und jeweils unter den Bedingungen der Emulsionspolymerisation polymerisiert. Der Aufbau der für die Schlußlackierung von PVC-Oberflächen erfindungsgemäßen dispergierten Polymerteilchen kann vorteilhaft so vorgenommen werden, daß zunächst ein Kern mit einem hohen Anteil, d.h. mit mehr als 70 Gew.-%, besonders 90 bis 99 Gew.-%, an Methylmethacrylat-Bausteinen hergestellt wird, wobei noch in Mengen von etwa 0 bis 5 Gew.-% mehrfunktionelle Monomere, wie beispielsweise Glykoldimethacrylat, Butandiol-1,4-diacrylat, Allylmethacrylat, Triallylcyanurat, mit einpolymerisiert werden können. Die mehrfunktionellen Monomeren sorgen gegebenenfalls für eine gewisse gewünschte Vernetzung des Kerns und bringen Pfropfstellen für das Anbinden der Polymerschale an den Kern. In der Polymerschale bzw. den Polymerschalen sind vorzugsweise 60 bis 100 Gew.-% der in das Gesamt-Kern-Schalen-Polymerisat eingebrachten Acryl- und/oder Methacrylestern mit aromatischen Gruppen als bzw. im Esterrest, neben anderen Monomeren, insbesondere Acryl-und/oder Methacrylsäureaklylestern mit 1 bis 10 C-Atomen im Alkylrest eingebaut. Das Gewichtsverhältnis von Acryl- bzw. Methacrylsäureestern mit aromatischen Gruppen als bzw. in dem Esterrest zu Acryl- bzw. Methacrylsäurealkylestern liegt hierbei etwa im Bereich von 20 : 80 bis 80 : 20.

Die mit 0 bis 5 Gew.-% im Dispersionspolymerisat eingebauten polymerisierbaren Carbonsäuren können statistisch in dem Polymerisat verteilt sein oder können bei Vorliegen von Kern-Schale-Polymerisaten entweder vorwiegend in dem Kern oder vorwiegend in der Schale bzw. den Schalen, als auch über die Kern-Schalen-Phasen etwa gleichmäßig oder auch ungleichmäßig vorhanden sein.

Die Emulsionspolymerisation wird mit den dafür bekannten, allgemein üblichen, nichtionischen, kationischen und anionischen Emulgatoren, wie z.B. den Alkali- und Ammoniumsalzen von sulfatierten Fettalkoholen, aromatischen Sulfonsäuren oder sulfierten Ethylenoxidaddukten durchgeführt.
Geeignete anionische Emulgatoren sind z.B. sulfierte und mit Alkali neutralisierte, oxethylierte Alkylphenole, die z.B. aus Nonylphenol- oder Triisobutylphenoladdukten mit 3 bis 30 Ethylenoxideinheiten pro Molekül hergestellt sein können.

Es kann nach dem Batchverfahren oder nach einem Zulaufverfahren wie dem Monomerzulauf- oder dem Emulsionszulaufverfahren vorgegangen werden. Mit besonderem Vorteil bedient man sich des Emulsionszulaufverfahrens. Bei diesem Verfahren wird nur ein Teil der Wasserphase, in der Regel 10 bis 70 % der Gesamtmenge im Polymerisationsgefäß vorgelegt. Im verbleibenden Teil der Wasserphase, die in der Regel einen Teil des Emulgiermittels enthält, werden die Monomerenphasen unter Bedingungen, unter denen noch keine Polymerisation eintritt, emulgiert und diese Emulsionen werden nacheinander in das Reaktionsgefäß eingeführt, wo Polymerisationsbedingungen herrschen.
Die Verfahren können in mannigfaltiger Weise abgewandelt werden. So kann man z.B. den Initiator oder einen Teil des Emulgiermittels getrennt von den Monomerphasen allmählich zulaufen lassen oder portionsweise eintragen. Als Polymerisationsinitiator werden überwiegend Alkali- oder Ammoniumperoxodisulfate verwendet, jedoch können daneben oder stattdessen auch andere, vorzugsweise wasserlösliche Initiatoren, wie z.B. 4,4′-Azobis-4,4′-dicyano-Valeriansäure oder Redoxysteme, wie Peroxosulfate, Sulfoxyverbindungen und Eisensalze oder Wasserstoffperoxide und Eisen-II-Salze, eingesetzt werden.

Die letzteren werden getrennt von den Monomerphasen zugesetzt, da sie schon bei Raumtemperatur die Polymerisation auslösen. Die Umsetzungstemperatur richtet sich nach der Zerfallstemperatur des Initiators und liegt im allgemeinen zwischen 10 und 100 Grad C.
Die Polymerisatkonzentration in den Dispersionen liegt bei deren Herstellung im Bereich von etwa 30 bis 70 Gew.-% Feststoff und die Viskositäten der Polymerdispersionen liegen im allgemeinen im Bereich von 10

bis 5 000 mPa s (ISO 2555).
Die Teilchengröße der Emulsionspolymerisate liegt vorteilhaft im Bereich von 50 bis 600 nm, vorzugsweise im Bereich von 100 bis 400 nm. (Bestimmung durch Photonenkorrelationsspektroskopie, auch als Autokorrelationsspektroskopie bekannt, mit dem Nano-Sizer TDM der Firma Coulter Electronics, Ltd., Luton, Beds.).

Die Polymerisate haben in der Regel minimale Filmbildungstemperaturen (MFT) im Bereich von 0 Grad C bis ca. 100 Grad C, vorzugsweise von 30 - 95 Grad C, insbesondere von 50 - 90 Grad C (Ullmanns Encyklopädie der technischen Chemie, 4. Auflage, Band 19, Seiten 17 , 18 und 141; DIN 53 787).
Bei der Lackierung wird die wäßrige Polymerdispersion auf den zu schützenden Gegenstand mit der PVC-Oberfläche appliziert. Dazu werden die Polymerdispersionen, die vorteilhaft als solche durch Emulsionspolymerisation hergestellt werden, gegebenenfalls nach Verdünnung mit Wasser, eingesetzt. Zur Haftungsverbesserung der Überzüge auf den PVC-Oberflächen kann wie bekannt N-Methylpyrrolidon oder ein Lösemittel mit vergleichbaren Eigenschaften mit der Polymerdispersion in Mengen von 2 bis 20 Gew.-%, bezogen auf die Polymerisatmenge aufgebracht werden. Diese Zusätze wirken vorteilhaft auch als Benetzungsmittel und fördern die Filmbildung vor allem solcher Polymerisate, deren MFT relativ hoch liegt.

Die Aufbringung der Überzüge kann nach den gängigen Verfahren, wie durch Tauchen, durch Aufsprühen mit einer handgeführten Spritzpistole oder auch maschinell durch Walzenauftrag oder des Rakelauftrages oder mit Verfahren, wie sie z.B. bei der Endbehandlung von Kunstledern üblich sind, durchgeführt werden. (Ullmanns Encyklopädie der technischen Chemie, 4. Auflage, Band 15, Seiten 688 bis 695 und Seiten 168 und 169).

## BEISPIELE

### A. Dispersionsherstellung

#### Beispiel 1

In einem 2 l Reaktionsgefäß ausgerüstet mit Rückflußkühler, Rührwerk und Zulaufgefäß werden 1,13 g Triisobutylphenolpolyglykolethersulfat-Na-Salz (Ethoxilierungsgrad 7) und 0,45 g Ammoniumperoxodisulfat in 360 g entsalztem Wasser bei 20 Grad C gelöst.

In diese Lösung wird bei 80 Grad C unter Rühren eine Emulsion bestehend aus:
630,0 g Methylmethacrylat
270,0 g Benzylmethacrylat
4,72g Triisobutylphenolpolyglykolethersulfat-Na-Salz
1,8 g Ammoniumperoxodisulfat und
550,0 g entsalztem Wasser
innerhalb von 3 Stunden zugegeben.

Nach Zulaufende wird der Ansatz auf Raumtemperatur abgekühlt; hierbei erfolgt bei 70 Grad C die Zugabe von 0,38 g 1,4 Diisopropylbenzolhydroperoxid und 0,3 g Natriumhydroxymethylsulfinat. Dann wird die Dispersion filtriert. Der pH der ca. 50 %-igen Dispersion beträgt 2,2.

#### Beispiel 2

Die Dispersionsherstellung erfolgt wie in Beispiel 1 mit dem Unterschied, daß statt Benzylmethacrylat 2-Phenoxiethylmethacrylat eingesetzt wird. Der pH der ca. 50 %-igen Dispersion beträgt 2,2.

#### Beispiel 3

In einem 2 l Reaktionsgefäß ausgerüstet mit Rückflußkühler, Rührwerk und Zulaufgefäß werden 1,49 g C15-Paraffinsulfonat-Na-Salz und 0,4 g Ammoniumperoxodisulfat in 390 g entsalztem $H_2O$ bei 20 Grad C gelöst.

Zu dieser Lösung werden nacheinander die folgenden 2 Emulsionszuläufe bei 80 Grad C unter Rühren zudosiert.

Der Zulauf von Emulsion I bestehend aus
243,0 g Methylmethacrylat
2,52g C15-Paraffinsulfonat-Na-Salz
0,37g Ammoniumperoxodisulfat und
180,0 g entsalztem Wasser
erfolgt innerhalb von 70 Minuten. Im direkten Anschluß wird während der nächsten 170 Minuten Emulsion II

bestehend aus

266,5 g Phenylmethacrylat
170,1 g Ethylacrylat
121,9 g Methylmethacrylat
8,5 g Methacrylsäure
5,9 g C15-Paraffinsulfonat-Na-Salz
0,85g Ammoniumperoxodisulfat und
430,0 g entsalztem Wasser

zudosiert.

Nach Zulaufende wird der Ansatz auf Raumtemperatur abgekühlt; hierbei erfolgt bei 70 Grad C die Zugabe von 0,34 g 1,4-Diisopropylbenzolmonohydroperoxid und 0,28 g Natriumhydroxymethylsulfinat. Dann wird die Dispersion filtriert. Der pH der ca. 45 %-igen Dispersion beträgt 2,7.

Beispiel 4

Die Dispersionsherstellung erfolgt wie in Beispiel 3 mit dem Unterschied, daß die Emulsion I folgende Bestandteile enthält:

239,4 g Methylmethacrylat
3,6 g Allylmethacrylat
2,52g C15-Paraffinsulfonat-Na-Salz
0,37g Ammoniumperoxodisulfat und
180,0 g entsalztem Wasser.

Der pH der ca. 45 %-igen Dispersion beträgt 2,7.

Zur Verwendung in der Rezeptur werden alle Dispersionen mit Ammoniaklösung auf pH = 9 eingestellt.

B. PVC-Lackierung

Die Dispersionen wurden mit Leitungswasser auf einen Festgehalt von 30 % verdünnt und zur Verbesserung der Benetzung 10 % N-Methylpyrrolidon zugegeben. Durch den Zusatz von ca. 3 % Verdickerdispersion auf Basis Polymethacrylsäure (Festgehalt 7,5 %) wurde die Viskosität erhöht. Mit einer Spiralrakel (Drahtstärke 0,6 mm) wurde die Lackharzdispersion auf schwarzes, glattes PVC-Kunstleder aufgezogen und im Umlufttrockenschrank bei 100 Grad C getrocknet. Nach 24-stündiger Lagerung bei Raumtemperatur wurden die Muster bezüglich Aussehen und Griffausfall der Oberfläche, Weichmachersperrwirkung, Haftung und Beständigkeit gegenüber Ethanol und Wasser geprüft.

| Dispersions-polymerisat nach Beisp. | Beurteilung | | | | |
|---|---|---|---|---|---|
| | Oberfläche nach 1) | Blockpunkt nach 2) | Haftung nach 3) | Ethanol u. Wasser Beständigkeit nach 4) | nach 5) |
| 1 | klebfrei glänzend | 1 | 1 | gut | gut |
| 2 | klebfrei glänzend | 2 | 1-2 | gut | gut |
| 3 | klebfrei glänzend | 2 | 1-2 | gut | gut |
| 4 | klebfrei glänzend | 2 | 2 | gut | gut |
| Vergleich mit Dispersionspoly-merisat aus 100 % Polymethylmeth-acrylat | klebfrei glänzend | 2-3 | 2-3 | weißer Fleck | weiß |

Prüfungsmethoden:

Zu 1:
Aussehen und Oberflächenklebrigkeit: visuell; Oberfläche gegeneinanderdrücken bei Raumtemperatur.

Zu 2:
Blockpunkt (Weichmachersperrwirkung)
Zwei Probenstücke: 2,5 cm x 1 cm und 2,5 x 5 cm werden Oberfläche gegen Oberfläche gelegt, mit einem Gewichtsstück von 1 kg belastet und 1 Stunde im Umlufttrockenschrank bei 82 Grad C getempert. Nach dieser Zeit wird das Muster entlastet und 1 Stunde bei Raumtemperatur abgekühlt. Danach werden die Proben vorsichtig getrennt und die Haftung benotet.

Benotung:

0 = Proben bleiben getrennt
1 = klebfrei, Proben trennen sich sofort
2 = leichtes Haften
3 = haftet stärker, keine Veränderung der Oberfläche
usw.
7 = klebt vollständig, Proben lassen sich nicht mehr trennen

Zu 3:
Haftung nach DIN 53 359 (Dauer-Knickversuch)
Geprüft wurde nach DIN-Probeform A bei Raumtemperatur. Nach 1000 Touren erfolgte die Beurteilung der Knickstelle mit der Lupe.

**Benotung:**

0 = keine Veränderung des Lackes
1 = Mattbruch
2 = Rissigkeit
3 = Weißbruch
4 = Lack abgelöst.

**Zu 4:**
**Ethanol-Beständigkeit**
Auf der lackierten PVC-Oberfläche werden 2 ml Ethanol (96,5 %-ig) aufgegossen und nach 30 Minuten Einwirkzeit die behandelte Stelle beurteilt.

**Zu 5:**
**Wasserbeständigkeit**
Auf der lackierten PVC-Oberfläche werden 2 ml dest. Wasser aufgegossen und nach 24 Stunden Einwirkzeit die behandelte Stelle beurteilt.

## Patentansprüche

1. Verwendung von wäßrigen Dispersionen von (Meth)acrylatpolymerisaten zur Beschichtung von Polyvinylchlorid-Oberflächen,
   dadurch gekennzeichnet,
   daß die (Meth)acrylatpolymerisate Copolymerisate darstellen, bestehend aus:
   a) 10 bis 90 Gew.-% Acryl- und/oder Methacrylsäurealkyl- bzw. - cycloalkylestern mit 1 bis 10 C-Atomen im Esterrest,
   b) 90 bis 10 Gew.-% Acryl- und/oder Methacrylsäureestern mit aromatischen Gruppen als Esterrest bzw. aromatische Gruppen im Esterrest enthaltend,
   c) 0 bis 5 Gew.-% polymerisierbaren Carbonsäuren und
   d) 0 bis 20 Gew.-% weiteren polymerisierbaren Verbindungen.

2. Verwendung von Wäßrigen Dispersionen von (Meth)acrylatpolymeren nach Anspruch 1, dadurch gekennzeichnet, daß die Acryl- und/oder Methacrylsäureester mit aromatischen Gruppen als Esterrest, bzw. aromatische Gruppen im Esterrest enthaltend, Verbindungen der allgemeinen Formel

$$H_2C = \overset{\overset{R}{|}}{C} - \overset{\overset{O}{\|}}{C} - O - (X)_a - (Y)_b - A$$

   sind, in der
   R = H oder $CH_3$,
   X = $CH_2$ mit

a = 0,1,2,3 oder 4 ist, oder für a = 3 oder 4, X eine verzweigte $C_3H_6$- oder $C_4H_8$-Gruppierung sein kann,
Y = O oder NH mit
b = 0 oder 1 und
A = $C_6$- bis $C_{10}$-Arylrest
bedeuten.

**3.** Verwendung von Wäßrigen Dispersionen von (Meth)acrylatpolymeren nach Anspruch 1, dadurch gekennzeichnet, daß die Copolymerisate durch Emulsionspolymerisation hergestellt sind und mehrphasige Polymerisate darstellen.

**4.** Verwendung von Wäßrigen Dispersionen von (Meth)acrylatpolymeren nach den Ansprüchen 1 und 2, dadurch gekennzeichnet, daß die Emulsionscopolymerisate als Kern-Schalen-Partikel mehrphasig aufgebaut sind.

**5.** Verwendung von Wäßrigen Dispersionen von (Meth)acrylatpolymeren nach den Ansprüchen 1 bis 4, dadurch gekennzeichnet, daß der Kern des Emulsionscopolymerisates aus mehr als 70 Gew.-% Methylmethacrylat aufgebaut ist und mit bis zu 5 Gew.-% mehrfunktionellen Monomeren vernetzt ist, und daß die auf den Kern aufpolymerisierten Phasen 60 bis 100 % der im Gesamtpolymerisat enthaltenen Acryl- bzw. Methacrylsäureester mit aromatischen Gruppen, als bzw. im Esterrest als solche vorhanden, enthalten.

## Claims

**1.** Use of aqueous dispersions of (meth)acrylate polymers for coating polyvinylchloride surfaces, characterised in that the (meth)acrylate polymers are copolymers consisting of

a) 10 to 90 wt.% of acrylic and/or methacrylic acid alkyl or cycloalkyl esters having 1 to 10 C-atoms in the ester group,
b) 90 to 10 wt.% of acrylic and/or methacrylic acid esters with aromatic groups as ester group or containing aromatic groups in the ester group,
c) 0 to 5 wt.% of polymerisable carboxylic acids and
d) 0 to 20 wt.% of further polymerisable compounds.

**2.** Use of aqueous dispersions of (meth)acrylate polymers according to claim 1, characterised in that the acrylic and/or methacrylic acid esters with aromatic groups as ester group or containing aromatic groups in the ester groups are compounds of general Formula

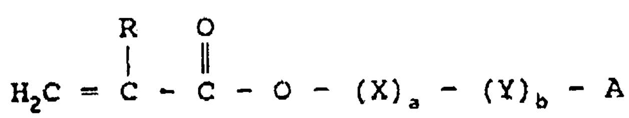

wherein,
R = H or $CH_3$,
X = $CH_2$ with
a = 0, 1, 2, 3 or 4, or when a = 3 or 4, X may also be a branched $C_3H_6$- or $C_4H_8$- group,
Y = O or NH with
b = 0 or 1 and
A = $C_6$- to $C_{10}$-aryl group.

**3.** Use of aqueous dispersions of (meth)acrylate polymers according to claim 1, characterised in that the copolymers are prepared by emulsion polymerisation and are multi-phase polymers.

**4.** Use of aqueous dispersions of (meth)acrylate polymers according to claims 1 and 2, characterised in that the emulsion copolymers have a multi-phase composition as core-shell particles.

5. Use of aqueous dispersions of (meth)acrylate polymers according to claims 1 to 4, characterised in that the core of the emulsion copolymer consists of more than 70 wt.% of methylmethacrylate and is cross-linked by up to 5 wt.% of multi-functional monomers, and that the phases polymerised on the core contain 60 to 100% of the acrylic or methacrylic acid esters contained in the total polymer, said acrylic or methacrylic acid esters having aromatic groups as ester group or containing aromatic groups in the ester group.

## Revendications

1. Utilisation de dispersions aqueuses de polymères de (méth)acrylate pour l'enduction de surfaces de polychlorure de vinyle, caractérisée en ce que les polymères de (méth)acrylate sont des copolymères composés de:
   a) 10 à 90% en poids d'esters alkyliques ou cycloalkyliques d'acide acrylique et/ou méthacrylique à 1-10 atomes de carbone dans le reste ester,
   b) 90 à 10% en poids d'esters de l'acide acrylique et/ou méthacrylique comportant des groupements aromatiques comme reste ester ou contenant des groupements aromatiques dans le reste ester,
   c) 0 à 5% en poids d'acides carboxyliques polymérisables et
   d) 0 à 20% en poids d'autres composés polymérisables.

2. Utilisation de dispersions aqueuses de polymères de (méth)acrylate selon la revendication 1, caractérisée en ce que les esters d'acide acrylique et/ou méthacrylique comportant des groupements aromatiques comme reste ester ou contenant des groupements aromatiques dans le reste ester sont des composés de formule générale

$$H_2C = \overset{R}{\overset{|}{C}} - \overset{O}{\overset{\|}{C}} - O - (X)_a - (Y)_b - A$$

dans laquelle

| | |
|---|---|
| R = | H ou $CH_3$, |
| X = | $CH_2$ avec |
| a = | 0, 1, 2, 3 ou 4, òu, lorsque a = 3 ou 4, X peut être un groupement $C_3H_6$ ou $C_4H_8$ ramifié, |
| Y = | O ou NH avec |
| b = | 0 ou 1 et |
| A = | reste alkyle en $C_6$ à $C_{10}$. |

3. Utilisation de dispersions aqueuses de polymères de (méth)acrylate selon la revendication 1, caractérisée en ce que les copolymères sont préparés par polymérisation en émulsion et sont des polymères à phases multiples.

4. Utilisation de dispersions aqueuses de polymères de (méth)acrylate selon la revendication 1 ou 2, caractérisée en ce que les produits de polymérisation en émulsion ont une structure à phases multiples sous forme de particules à noyau et enveloppe.

5. Utilisation de dispersions aqueuses de polymères de (méth)acrylate selon l'une quelconque des revendications 1 à 4, caractérisée en ce que le noyau des produits de polymérisation en émulsion est constitué par plus de 70% en poids de méthacrylate de méthyle et est réticulé avec 5% en poids au maximum de monomères polyfonctionnels, et en ce que les phases polymérisées sur le noyau contiennent, présents en tant que tels, 60 à 100% des esters d'acide acrylique ou méthacrylique comportant des groupements aromatiques en tant que reste ester ou dans le reste ester, qui sont contenus dans le produit de polymérisation total.